(19) Europäisches Patentamt
European Patent Office
Office européen des brevets

(11) Veröffentlichungsnummer: **0 175 204**
**A1**

# (12) EUROPÄISCHE PATENTANMELDUNG

(21) Anmeldenummer: **85111080.9**

(22) Anmeldetag: **03.09.85**

(51) Int. Cl.⁴: **C 09 B 56/02,** D 06 P 3/06

(30) Priorität: **15.09.84 DE 3433980**

(43) Veröffentlichungstag der Anmeldung: **26.03.86**
**Patentblatt 86/13**

(84) Benannte Vertragsstaaten: **CH DE FR GB LI**

(71) Anmelder: **BAYER AG, Konzernverwaltung RP**
**Patentabteilung, D-5090 Leverkusen 1 Bayerwerk (DE)**

(72) Erfinder: **Mennicke, Winfried, Dr., Steglitzer Strasse 8,**
**D-5090 Leverkussen 1 (DE)**

## (54) Unsymmetrische 1:2-Chromkomplexfarbstoffe.

(57) 1:2-Chromkomplexfarbstoffe der Formel

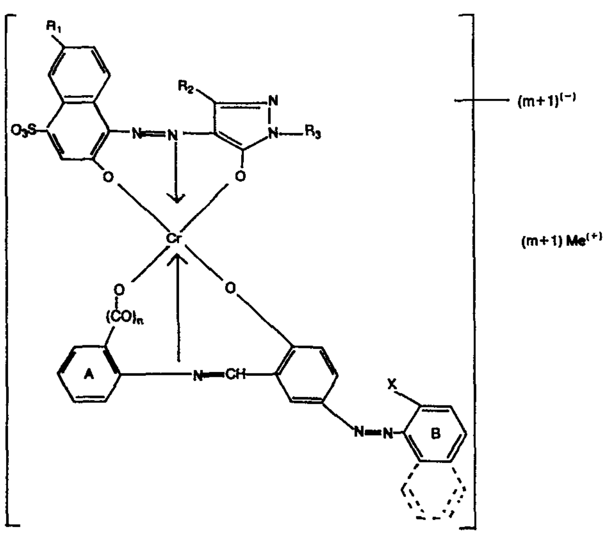

mit den in der Beschreibung genannten Substituentenbedeutungen eignen sich hervorragend zum Färben und Bedrucken natürlicher und synthetischer stickstoffhaltiger Materialien, insbesondere Wolle, Polyamid mit Leder. Sie liefern Färbungen in roten Nuancen mit guten Allgemeinechtheiten.

EP 0 175 204 A1

0175204

BAYER AKTIENGESELLSCHAFT 5090 Leverkusen, Bayerwerk
Konzernverwaltung RP
Patentabteilung My/Kü-c

## Unsymmetrische 1:2-Chromkomplexfarbstoffe

Gegenstand der vorliegenden Erfindung sind neue unsymmetrische 1:2-Chromkomplexfarbstoffe der Formel I

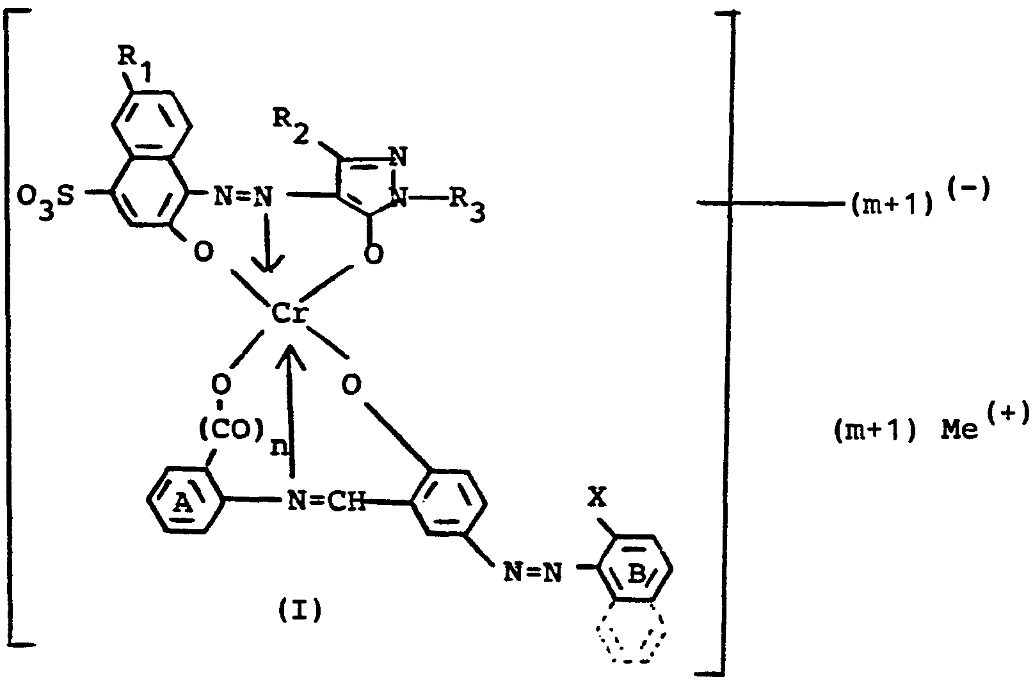

(I)

worin

X = H, Cl, $SO_3H$, Alkoxy, $NO_2$,

$R_1$ = H oder $NO_2$,

$R_2$ = Alkyl, Aryl, COOH, $CONH_2$, CN, CO-O-Alkyl oder CO-O-Aryl,

| | | |
|---|---|---|
| $R_3$ | = | H, Alkyl oder Aryl, |
| n | = | 0 oder 1, |
| m | = | 1 oder 2 (Zahl der Sulfogruppen) und |
| $Me^{(+)}$ | = | Kation bedeuten und die Ringe A und B weitere Substituenten tragen können. |

Geeignete Substituenten sind beispielsweise

| | |
|---|---|
| im Ring A: | $SO_3H$, COOH, Sulfamoyl, Carbamoyl, Alkylsulfonyl, Arylsulfonyl, $NO_2$, Alkyl, Alkoxy, Cl, Br oder Acylamino, |
| im Ring B: | $SO_3H$, Sulfamoyl, Alkylsulfonyl, Arylsulfonyl, Alkyl, Alkoxy, Trifluormethyl, CN, $NO_2$, $NH_2$, Cl oder Br. |

Die Alkyl- und Arylgruppen können ebenfalls substituiert sein.

Bevorzugte Alkyl- und Alkoxygruppen sind solche mit 1-4 C-Atomen, die gegebenenfalls beispielsweise durch CN, Cl, OH, $C_1$-$C_4$-Alkoxy oder Phenyl substituiert sind.

Bevorzugte Arylreste sind insbesondere gegebenenfalls substituierte Phenylreste mit Substituenten wie Halogen,

insbesondere Cl oder Br, $NO_2$, $C_1$-$C_4$-Alkyl, $C_1$-$C_4$-Alkoxy, sowie die unsubstituierte oder durch eine Sulfogruppe substituierte Naphthylgruppe.

Die Sulfamoyl- und Carbamoylgruppen können ebenfalls durch die obengenannten Alkyl- und Arylreste mono- oder disubstituiert sein.

Bevorzugte Acylaminogruppen sind insbesondere $C_1$-$C_4$-Alkylcarbonylamino, $C_1$-$C_4$-Alkoxycarbonylamino, $C_1$-$C_4$-Alkylsulfonylamino, Arylcarbonylamino, Arylsulfonylamino.

Das Kation $Me^{(+)}$ stellt bevorzugt ein Alkalikation, wie $Li^{(+)}$, $Na^{(+)}$, $K^{(+)}$, das Ammonium- oder ein mono- bis tetra- niedrigalkylsubstituiertes Ammonium-Ion dar.

Bevorzugte Farbstoffe sind die monosulfogruppenhaltigen Farbstoffe der Formel II

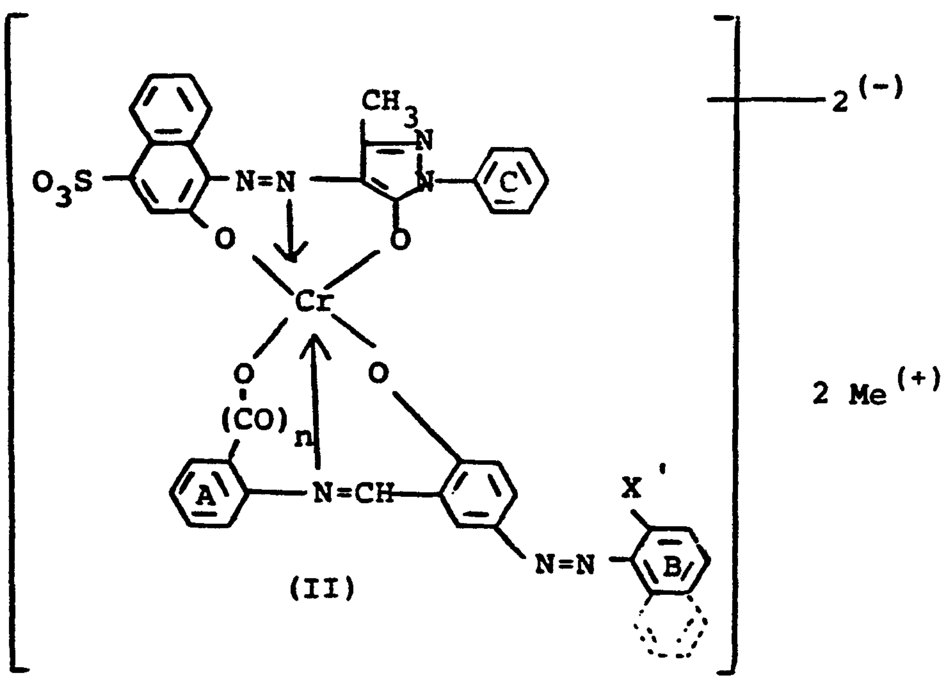

(II)

wobei

n = 0 oder 1 bedeutet, die Ringe A und B mit Ausnahme der Sulfogruppe substituiert sein können, der Ring C durch Cl, Alkyl, Alkoxy, Sulfamoyl substituiert sein kann und X' für H, Cl, $NO_2$ oder Alkoxy steht.

Bevorzugte Farbstoffe der Formel II enthalten im Ring B zwei Chlorgruppen insbesondere in 2, 5-Stellung bezogen auf die Azogruppe.

Weiterhin bevorzugte Farbstoffe der Formel II tragen im Ring B eine Nitrogruppe in o- oder p-Stellung zur Azogruppe und entsprechen der Formel III:

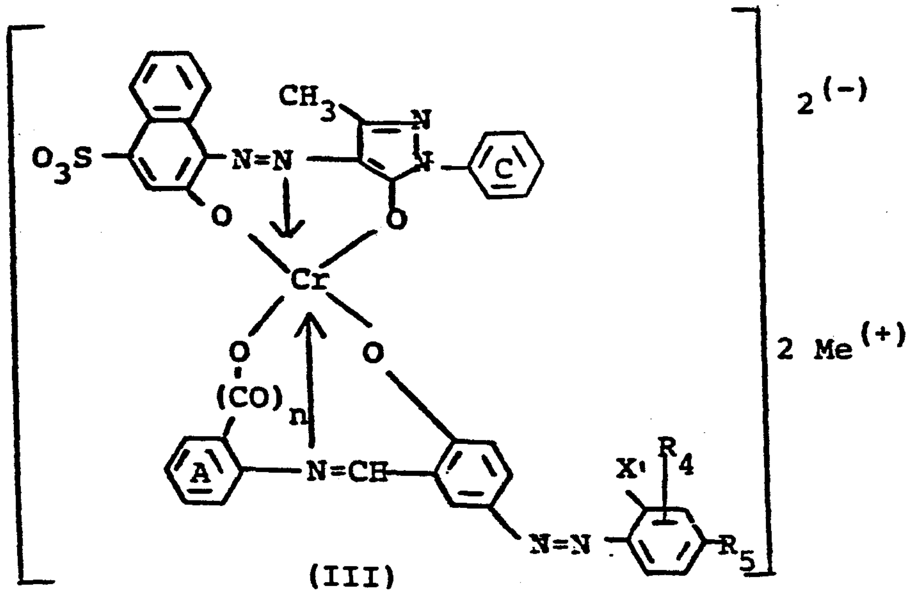

(III)

worin

$R_4$, $R_5$ = H, Cl, Br, Alkyl, Alkoxy, Sulfamoyl, Alkylsulfonyl, Trifluormethyl, $NH_2$ oder $NO_2$ bedeutet.

Von diesen Farbstoffen sind wiederum diejenigen bevorzugt, die im Ring B eine Chlorgruppe in o-Stellung zur Azogruppe und die Nitrogruppe in p-Stellung tragen.

Die erfindungsgemäßen Farbstoffe der Formel I werden erhalten, indem man einen Farbstoff der Formel

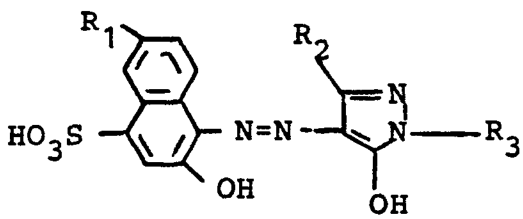

(IV)

oder

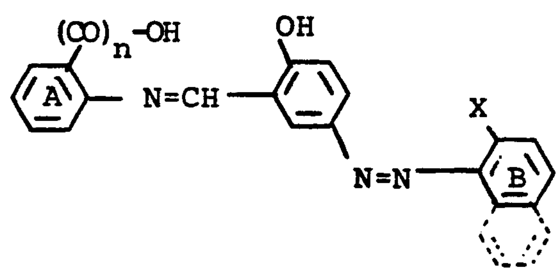

(V)

mit einem chromabgebenden Mittel in den 1:1-Chromkomplex überführt und diesen dann mit dem nichtmetallisierten Farbstoff der Formel IV bzw. V umsetzt.

Wegen ihrer leichten Bildung können anstelle der Azomethine V auch Gemische aus je einem Amin der Formel

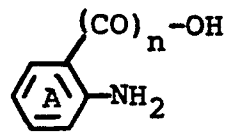

(VI)

und einem arylazosubstituierten Salicylaldehyd der Formel

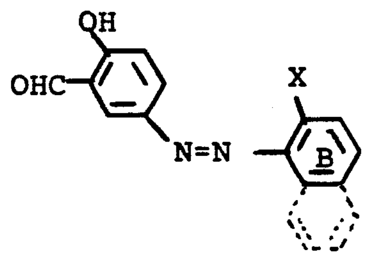

(VII)

eingesetzt werden.

Die Monoazofarbstoffe der Formel IV werden in bekannter Weise durch Kuppeln von diazotierten Aminonaphtholen der Formel

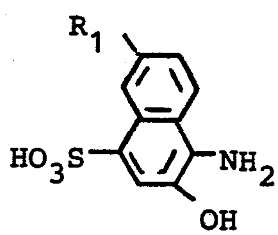

(VIII)

auf Pyrazolone der Formel

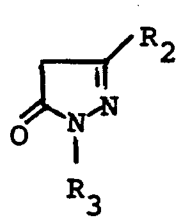

(IX)

erhalten, diejenigen der Formel VII durch Kuppeln von diazotierten Aminen der Formel

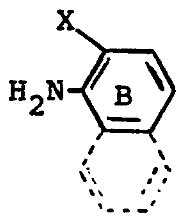

(X)

auf Salicylaldehyd.

Geeignete o-Aminophenole bzw. o-Aminobenzoesäuren der Formel VI sind beispielsweise in der Deutschen Offenlegungsschrift 3 121 923 und geeignete Pyrazolone der Formel IX beispielsweise in der Deutschen Offenlegungsschrift 3 132 334 beschrieben.

Geeignete Arylamine der Formel X sind beispielsweise:

Anilin, 2-, 3- oder 4-Methylanilin, 2,3-, 2,4-, 2,5- oder 3,5-Dimethylanilin, 2-, 3- oder 4-Chloranilin, 4-Bromanilin, 2,3-, 2,4-, 2,5-, 3,4- oder 3,5-Dichloranilin, 2-, 3- oder 4-Methoxyanilin, 5-Chlor-2-methoxyanilin, 4-Chlor-2,5-dimethoxyanilin, 2-Methyl-3-, -4- oder -5-chloranilin, 4-Chlor-3-methylanilin, 3-Chlor-4-methylanilin, 3-Nitroanilin, 3-Nitro-4- oder -6-chloranilin, 4-Acetaminoanilin, 4-Benzoylaminoanilin, Anilin-2-, -3- oder -4-sulfonsäure, Anilin-3- oder -4-carbonsäure, Anilin-3- oder -4-sulfamoyl, 2-Chloranilin-5-sulfonsäure, 4-Chloranilin-3-sulfonsäure, 2,5-Dichloranilin,

4-sulfonsäure, 4- oder 5-Acetaminoanilin-2-sulfonsäure, 4-Methylanilin-2- oder -3-sulfonsäure, 2- oder 3-Methylanilin-4-sulfonsäure, 2-Chlor-6-methylanilin-4-sulfonsäure, 2-Methylanilin-5-sulfonsäure, 4-Chlor-5-methylanilin-2-sulfonsäure, 2,4-Dimethylanilin-5-sulfonsäure, 2-Naphthylamin-1-, -5-, -6-, -7- oder 8-sulfonsäure, 1-Naphthalamin-2-, -3-, -4-, -5-, -6-, -7- oder -8-sulfonsäure, 1-Naphthylamin, ferner die eine o- oder p-Nitrogruppe tragenden Anilinderivate 2- oder 4-Nitroanilin, 2-Chlor-4-nitroanilin, 2-Methoxy-4-nitro-5-chloranilin, 2,5-Dichlor-4-nitroanilin, 2-Methyl-4-nitro-5-chloranilin, 2-Methyl-, 2-Brom- oder 2-Methylsulfonyl-4-nitroanilin, 2-Methoxy-4-nitroanilin, 2,5-Dimethoxy-4-nitroanilin, 4-Nitroanilin-2- oder -3-sulfonsäure, 2-Methoxy-4-nitroanilin-5- oder -6-sulfonsäure, 4-Nitroanilin-2-sulfonamid, 2,4-Dinitroanilin, 3-Amino-4-nitroanilin, 2,4-Dinitroanilin-6-sulfonsäure, 2,6-Dinitro-4-sulfonsäure, 4-Trifluormethyl-, 4-Chlor-, 4-Methyl- oder 4-Methoxy-2-nitroanilin, 2-Nitroanilin-4-sulfonsäure oder -4-carbonsäure, 2-Nitro-5-chloranilin, 2-Nitro-6-methylanilin und 2-Nitro-4,6-dichlor- oder -4,6-dimethylanilin.

Zur Herstellung der erfindungsgemäßen 1:2-Chromkomplexfarbstoffe der Formel I werden vorzugsweise die Azofarbstoffe IV in die 1:1-Chromkomplexe überführt. Dies kann beispielsweise in einem sauren Medium mit mindestens einem Moläquivalent eines chromabgebenden Mittels

in offener oder geschlossener Apparatur bei Siedetemperatur des Mediums oder gegebenenfalls bei 100°C übersteigenden Temperaturen erfolgen.

Als chromabgebende Mittel können dreiwertige Chromsalze, wie Chromformiat, Chromacetat, Chromfluorid, Chromchlorid oder Chromsulfat dienen. Der Farbstoff kann in wäßrigem Medium, in einem Gemisch aus Wasser und einem organischen Lösungsmittel, wie Alkohol, Butanol oder Formamid, oder in einem organischen Lösungsmittel allein, wie Butanol oder Ethylglykol, chromiert werden.

Anschließend werden die von den Azofarbstoffe IV oder den Azomethinen V abgeleiteten 1:1-Chromkomplexe an einen anderen Farbstoff entsprechend der Formel I angelagert, wobei vorzugsweise die 1:1-Chromkomplexe der Azofarbstoffe IV mit Gemischen aus den Aminen VI und den Aldehyden VII umgesetzt werden. Die Bildung dieser 1:2-Chrommischkomplexe geschieht zweckmäßig in alkalischem bis schwach saurem Medium bei gewöhnlicher oder erhöhter Temperatur, vorzugsweise im Bereich von 50-100°C, gegebenenfalls in Gegenwart eines Lösungsmittels oder in einem Lösungsmittel allein, wobei beispielsweise Ethanol, Ethylmethylketon, Glykole, Etheralkohole, wie Ethyl- oder Butylglykol, Formamid, Dimethylformamid oder N-Methylpyrrolidon als Lösungsmittel in Frage kommen.

Die bei der Anlagerung des metallfreien an den chromhaltigen Farbstoff freiwerdende Säure wird durch Zusatz alkalisch wirkender Mittel abgefangen, beispielsweise durch Zusatz von Hydroxiden oder Carbonaten von Alkalimetallen, wie Lithium-, Natrium-, Kaliumhydroxid oder -carbonat, von Ammoniak oder organischen Aminen, wie Mono-, Di-, Triethylamin, Mono-, Di- oder Triethanolamin, oder von Tetraalkylammoniumhydroxiden, wie Tetramethylammoniumhydroxid. Vorzugsweise dosiert man das alkalisch wirkende Mittel so zu, daß die Reaktion bei einem konstanten pH-Wert abläuft.

Am Ende der Reaktion liegen die erfindungsgemäßen 1:2-Chromkomplexfarbstoffe als Salz der Komplexsäure und der an ihr gebundenen Sulfogruppen mit den obenerwähnten alkalisch wirkenden Mittel vor, beispielsweise als Alkalisalze bei Verwendung von Alkalihydroxiden oder -carbonaten oder als Ammoniumsalze bei Verwendung von Ammoniak oder Aminen.

Die so hergestellten 1:2-Chromkomplexe der Formel I können durch Ansäuren, Aussalzen mit Alkalisalzen oder Eindampfen isoliert und mit den üblichen Stell- und Hilfsmitteln zu wasserlöslichen Präparationen verarbeitet werden.

Aus den erfindungsgemäßen Farbstoffen können nach bekannten Methoden auch Flüssigpräparationen gewonnen werden. Besonders bevorzugt ist das Verfahren der Deutschen Offenlegungsschrift 2 443 483, das zu lagerstabilen konzentrierten Lösungen ihrer Lithiumsalze führt.

Die festen, in Wasser löslichen und die flüssigen, mit Wasser mischbaren Präparationen eignen sich zum Färben und Bedrucken der verschiedensten Stoffe, vor allem zum Färben von natürlichen oder synthetischen stickstoffhaltigen Materialien, wie Wolle, Seide, Leder, Polyamid- oder Polyurethanfaser.

Man erhält gleichmäßige Färbungen in roten Nuancen mit guten Licht- und Gebrauchsechtheiten.

Die bevorzugte Verwendung der Farbstoffe liegt im Färben von Wolle, Polyamid und insbesondere von Pelzen und Leder, wobei neben Chomleder auch Veloursleder und verschieden nachgegerbte Leder in Frage kommen. Beim Färben von Leder gelangen die Farbstoffe bevorzugt als Flüssigpräparationen zur Anwendung, die sich gleichzeitig zum Sprühfärben als auch zum Färben im Faß und auf Durchlauf-Mehrzweckmaschinen eignen. Dabei zeichnen sich die erfindungsgemäßen Farbstoffe durch ein gutes Durchfärbevermögen, eine gute Bindung zum Substrat und eine gute Migrationsechtheit aus.

Beispiel 1

18,8 g 2-Aminophenol-4-sulfonamid und 30,6 g des Kupplungsproduktes aus Salicylaldehyd und diazotiertem 2-Chlor-4-nitroanilin werden in 500 ml Wasser miteinander verrührt. Man fügt den Chrom-1:1-Komplex, der aus 26,65 g $CrCl_3.6H_2O$ und 42,4 g Monoazofarbstoff aus 1-Phenyl-3-methyl-5-pyrazolon und diazotierter 2-Hydroxy-1-naphthylamin-4-sulfonsäure hergestellt wurde, zu, neutralisiert mit 10 n Natronlauge und erwärmt das Gemisch auf 75-80°C. Dabei wird durch gelegentliches Zutropfen von 10 n Natronlauge der pH bei 7 bis 7,5 gehalten. Insgesamt werden etwa 45 ml 10 n Natronlauge verbraucht. Nach 1 Stunde Rühren bei 75-80°C ist die Bildung des unsymmetrischen Chrom-1:2-Komplexes der Formel

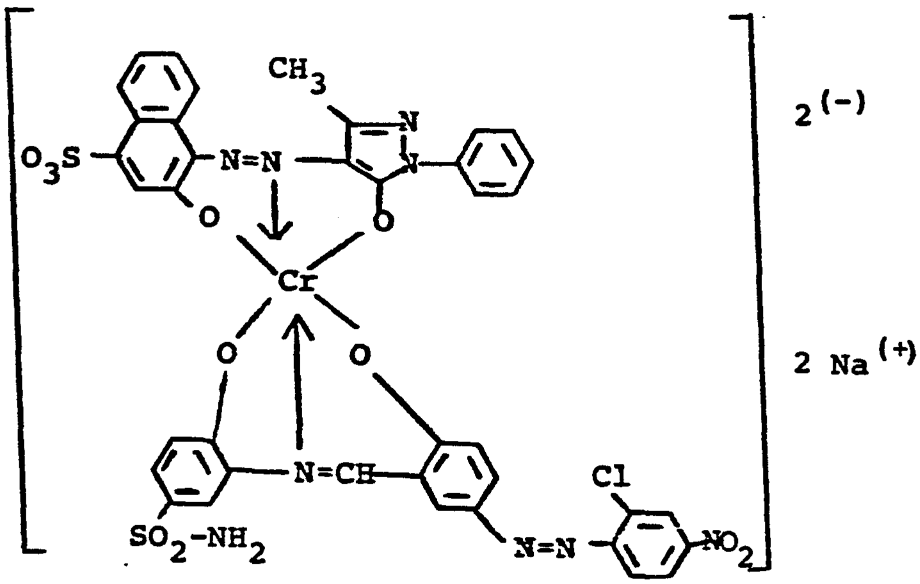

beendet. Der Farbstoff wird durch Zugabe von Natriumchlorid abgeschieden, abfiltriert und getrocknet. Er stellt ein dunkelrotes Pulver dar, welches Wolle, Polyamid und Leder in roten Nuancen von guten Echtheiten färbt.

Beispiel 2

Analog erhält man unter den Bedingungen des Beispiels 1 den Farbstoff der Formel

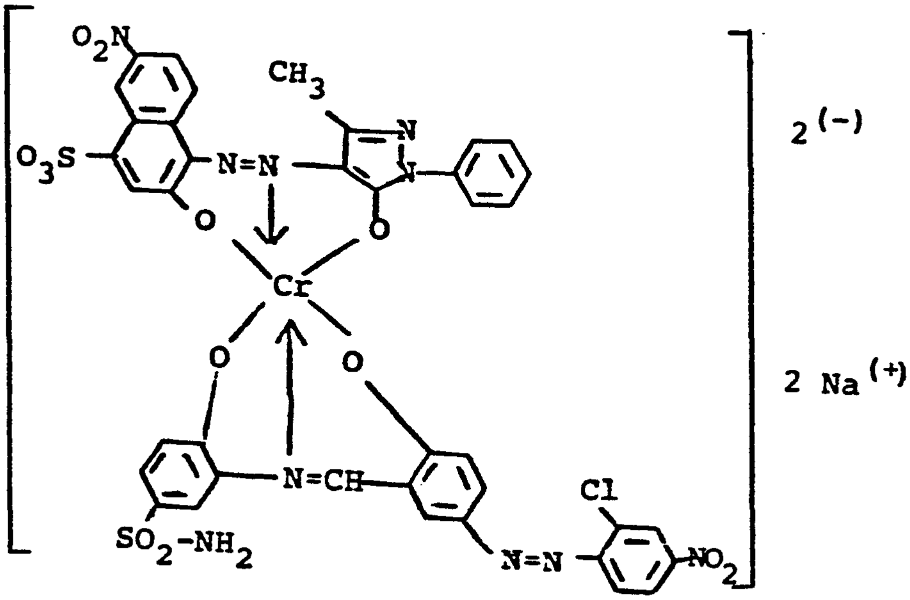

wenn man anstelle der 2-Hydroxy-1-naphthylamin-4-sulfonsäure die äquivalente Menge 6-Nitro-2-hydroxy-1-naphthylamin-4-sulfonsäure verwendet. Der Farbstoff färbt Wolle, Polyamid und Leder in blaustichigen, gedeckteren Rottönen.

Arbeitet man wie in Beispiel 1 angegeben unter Verwendung der entsprechenden Ausgangsverbindungen, so erhält man ebenfalls wertvolle Farbstoffe der allgemeinen Formel

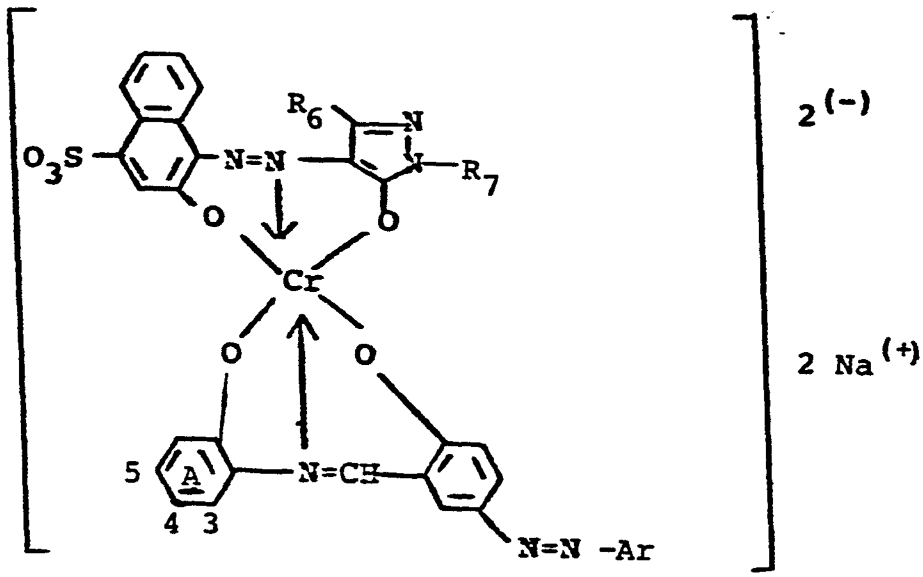

mit den Substituentenbedeutungen der folgenden Tabelle I:

Tabelle I

| Substituenten im Ring A | $R_6$ | $R_7$ | Ar | Nuance auf Leder |
|---|---|---|---|---|
| 4-Chlor | $CH_3$ | $C_6H_5$ | 2-Sulfo-4-nitrophenyl | blaustichig rot |
| 4-Chlor | $CH_3$ | $C_6H_5$ | 4-Sulfophenyl | rot |
| 4-Chlor | $C_6H_5$ | $C_6H_5$ | 2-Sulfo-4-nitrophenyl | blaustichig rot |
| 4,6-Dichlor | $CH_3$ | $C_6H_5$ | 4-Sulfo-2-nitrophenyl | blaustichig rot |
| 4-Nitro | $CH_3$ | $C_6H_5$ | 2-Sulfo-4-nitrophenyl | rot |
| 5-Nitro | $CH_3$ | $C_6H_5$ | 2-Sulfo-4-nitrophenyl | blaustichig rot |
| 4-Nitro-6-chlor | $CH_3$ | $C_6H_5$ | 1-Sulfonaphthyl-(2) | rot |
| 4-Nitro | $CH_3$ | 3-Sulfophenyl | Naphthyl-(1) | scharlach |
| 4-Nitro | $CH_3$ | 4-Sulfophenyl | 2,5-Dichlorphenyl | rot |
| 4-Nitro | $CH_3$ | 2-Chlor-4-sulfophenyl | 2-Chlor-4-nitrophenyl | rot |
| 4-Sulfamoyl | $CH_3$ | 2,5-Dichlor-4-sulfophenyl | 2-Chlor-4-nitrophenyl | rot |
| 4-Sulfo-6-nitro | $CH_3$ | 4-Methylphenyl | 2-Chlor-4-nitrophenyl | blaustichig rot |
| 6-Sulfo-4-nitro | $CH_3$ | 2-Chlorphenyl | 2-Methoxy-4-nitrophenyl | rot |
| 4-Chlor-6-sulfo | $CH_3$ | $C_6H_5$ | 2,5-Dichlorphenyl | rot |
| 6-Sulfo-4-chlor | $CH_3$ | $C_6H_5$ | 4-Chlorphenyl | rot |

Beispiel 3

In 400 ml eines Lösungsmittelgemisches aus ca. 95 % 1-Methoxy-2-propanol und 5 % 2-Methoxy-1-propanol werden 13,7 g 2-Aminobenzoesäure, 30,6 g des Kupplungsproduktes aus Salicylaldehyd und diazotiertem 2-Chlor-4-nitroanilin und Chrom-1:1Komplex, hergestellt aus 26,65 g $CrCl_3 \cdot 6H_2O$ und 42,4 g Monoazofarbstoff aus 1-Phenyl-3-methyl-5-pyrazolon und diazotierter 2-Hydroxy-1-naphthylamin-4-sulfonsäure, eingetragen. Das Gemisch wird mit 8,4 g $LiOH \cdot H_2O$ versetzt, durch kräftiges Rühren homogenisiert und im Verlauf von 1 Stunde auf 80°C erwärmt. Dabei wird durch Zugabe von weiteren ca. 10 g $LiOH \cdot H_2O$ der pH im Bereich von 6,5-7 gehalten. Nach ca. 1/2 Stunde ist die Umsetzung zum Chrommischkomplex beendet. Nach Abkühlen auf Raumtemperatur und Abtrennen geringer Elektrolytmengen erhält man eine konzentrierte, lagerstabile Lösung des Farbstoffes der Formel

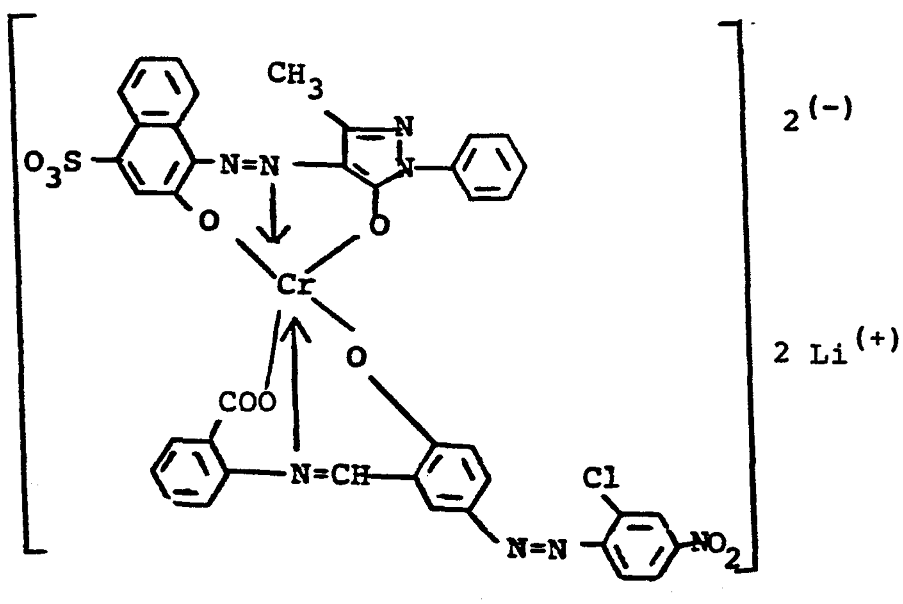

mit der man auf Leder durch Spritz- und Tauchfärbung echte rote Färbungen erzielt. Die Nuance ist etwas gelber als beim Farbstoff des Beispiels 1.

Beispiel 4

43,8 g des Kupplungsproduktes aus diazotierter 2-Hydroxy-1-naphthylamin-4-sulfonsäure und 1-(4-Methylphenyl)-3-methyl-5-pyrazolon werden in 400 ml Ethylglykol in Gegenwart von 26,65 g $CrCl_3 \cdot 6H_2O$ durch zwei- bis dreistündiges Erhitzen bei 125°C in den Chrom-1:1-Komplex umgewandelt. Nach Abkühlen auf 80°C werden nebeneinander 18,8 g 2-Aminophenol-4-sulfonamid, 8,4 g $LiOH \cdot H_2O$ und die feuchte Paste von 30,6 g Kupplungsprodukt aus diazotiertem 2-Chlor-4-nitroanilin und Salicylaldehyd zugesetzt. Man rührt weiterhin bei 80°C und hält den pH durch Zugabe von nochmals ca. 10 g $LiOH \cdot H_2O$ im Bereich von 6,5-7. Nach etwa einer halben Stunde läßt man auf Raumtemperatur abkühlen, filtriert von geringen Salzausfällungen ab und erhält eine konzentrierte, lagerbeständige Lösung des Farbstoffes der Formel

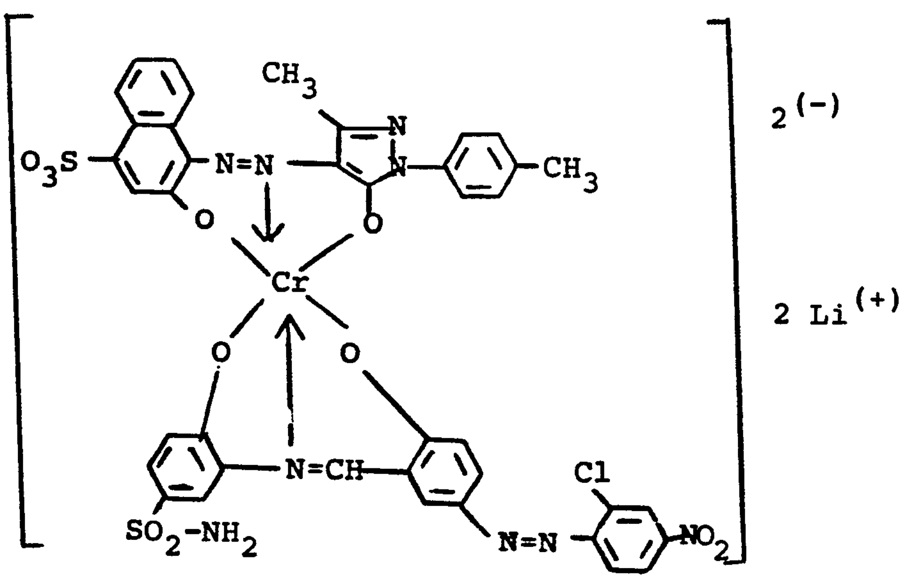

Die Lösung gibt beim Spritz- und Tuachfärben auf Leder rote Färbungen mit guter Diffusionsechtheit.

Arbeitet man wie im Beispiel 4 angegeben unter Verwendung der entsprechenden Ausgangsverbindungen, so erhält man Farbstoffe der allgemeinen Formel

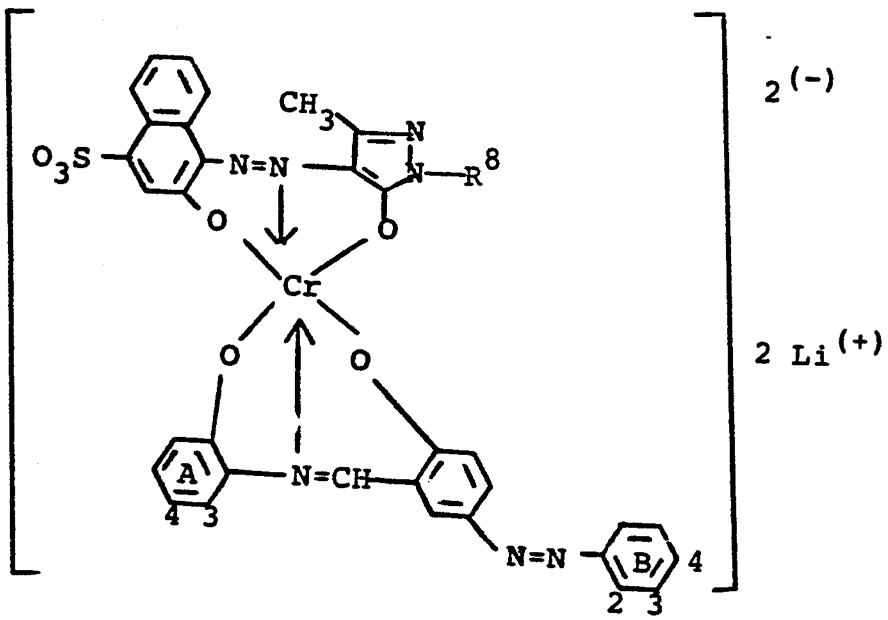

mit den Substituentenbedeutungen der Tabelle II.

Tabelle II

| Substitution im Ring A | Substitution im Ring B | $R_8$ | Nuance auf Leder |
|---|---|---|---|
| 4-Sulfamoyl | 2-Methoxy-4-nitro | $C_6H_5$ | rot |
| 4-Sulfamoyl | 2,5-Dichlor | $C_6H_5$ | rot |
| 4-Dimethylsulfamoyl | 2-Chlor-4-nitro | $C_6H_5$ | rot |
| 5-Sulfamoyl | 2,5-Dichlor | $C_6H_5$ | rot |
| 5-Dimethylsulfamoyl | 2-Chlor-4-nitro | $C_6H_5$ | blaustichig rot |
| 4-Chlor | 2-Chlor-4-nitro | H | blaustichig rot |
| 4,6-Dichlor | 2-Methoxy-4-nitro | 3-Sulfamoyl-phenyl | blaustichig rot |
| 4-Nitro | 2-Chlor-4-nitro | $C_6H_5$ | rot |
| 4-Nitro | 4-Chlor | $C_6H_5$ | rot |
| 5-Nitro | 2,5-Dichlor | H | blaustichig rot |
| 5-Nitro | 4-Sulfamoyl | 4-Methylphenyl | blaustichig rot |
| 4-Ethylsulfonyl | - | 4-Methylphenyl | scharlach |
| 4-Chlor-6-nitro | 2,5-Dichlor | H | blaustichig rot |
| 4-Methyl-6-nitro | 2-Chlor-4-nitro | $C_6H_5$ | blaustichig rot |
| 4-Nitro-6-chlor | 4-Methyl | $C_6H_5$ | rot |

Patentansprüche

1. 1:2-Chromkomplexfarbstoffe der Formel

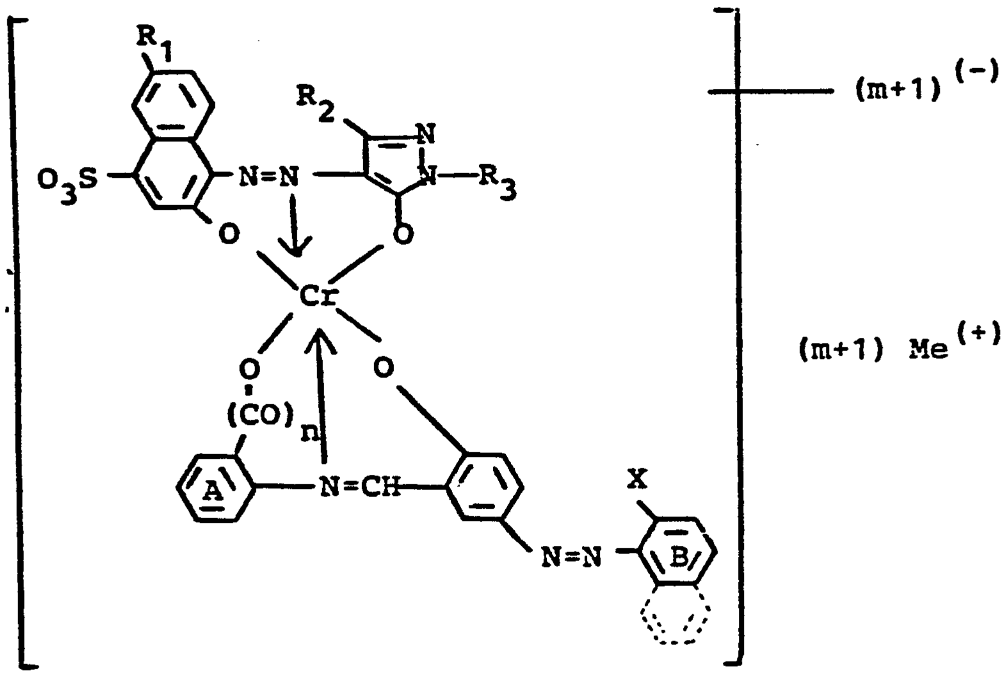

worin

X = H, Cl, $SO_3H$, Alkoxy, $NO_2$,

$R_1$ = H oder $NO_2$,

$R_2$ = Alkyl, Aryl, COOH, $CONH_2$, CN, CO-O-Alkyl oder CO-O-Aryl,

$R_3$ = H, Alkyl oder Aryl,

n = 0 oder 1,

m = 1 oder 2 (Zahl der Sulfogruppen) und

$Me^{(+)}$ = Kation bedeuten und die Ringe A und B weitere Substituenten tragen können.

2. 1:2-Chromkomplexfarbstoffe der Formel

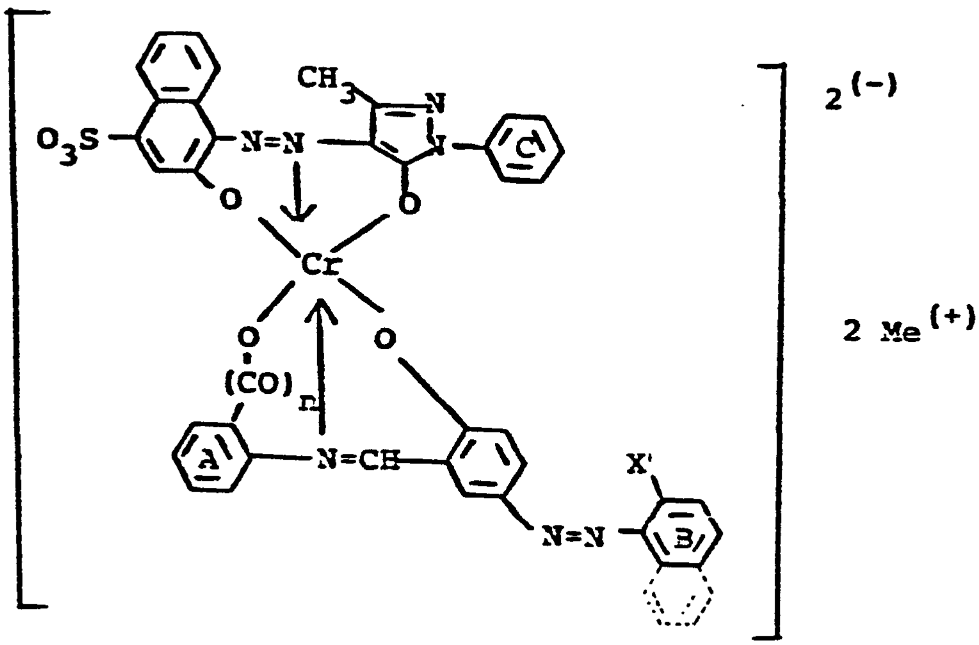

wobei
n = O oder 1 bedeutet, die Ringe A und B mit Ausnahme der Sulfogruppe substituiert sein können, der Ring C durch Cl, Alkyl, Alkoxy oder Sulfamoyl substituiert sein kann und X' für H, Cl, Alkoxy oder $NO_2$ steht.

3. 1:2-Chromkomplexfarbstoffe der Formel

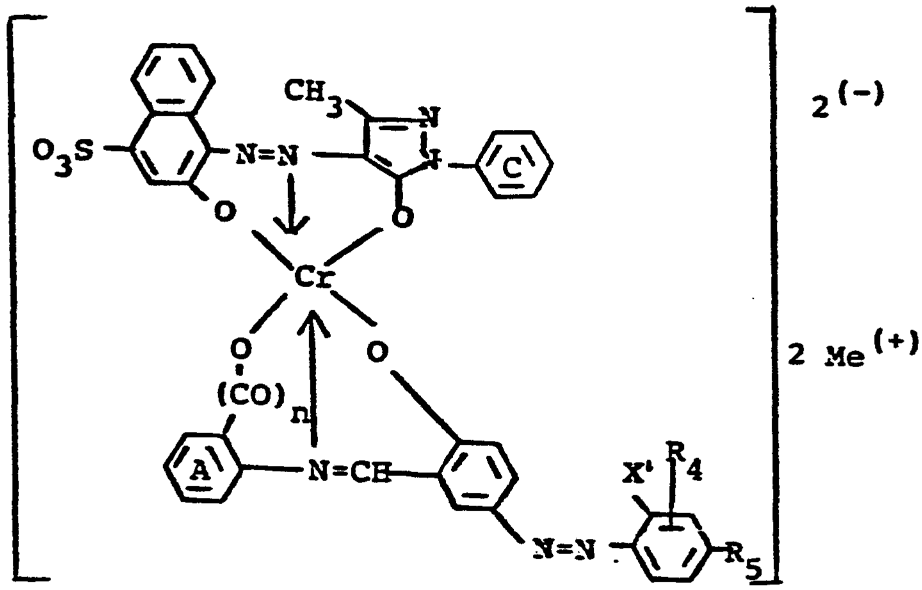

worin

$R_4$, $R_5$ = H, Cl, Br, Alkyl, Alkoxy, Sulfamoyl, Alkylsulfonyl, Trifluormethyl, $NH_2$ oder $NO_2$ bedeutet.

4. Farbstoffe des Anspruchs 3 mit X' = Cl und $R_5$ = $NO_2$.

5. Verwendung der Farbstoffe der Ansprüche 1-4 zum Färben von natürlichen und synthetischen stickstoffhaltigen Materialien, insbesondere Leder.

Europäisches Patentamt

# EUROPÄISCHER RECHERCHENBERICHT

0175204

Nummer der Anmeldung

EP 85 11 1080

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 392 087 (BASF) * Ansprüche 1,2,4; Beispiele 8,9,17 * | 1-3,5 | C 09 B 56/02<br>D 06 P 3/06 |
| | --- | | |
| A | EP-A-0 072 501 (BAYER) * Anspruch 1 * & DE - A - 3 132 334 (Kat. D,A) | 1 | |
| | --- | | |
| A | FR-A-2 311 063 (CIBA-GEIGY) * Anspruch 1; Beispiel 4; Seite 31, Nr. 112-114 * | 1 | |
| | --- | | |
| A | EP-A-0 110 825 (CIBA-GEIGY) * Anspruch 1; Seite 4, Zeilen 8-14 * | 1 | |
| | --- | | |
| A | FR-A-1 442 837 (GEIGY) * Zusammenfassung 1,2 * | 1 | RECHERCHIERTE SACHGEBIETE (Int. Cl.4) |
| | ----- | | C 09 B |

Der vorliegende Recherchenbericht wurde für alle Patentansprüche erstellt.

| Recherchenort | Abschlußdatum der Recherche | Prüfer |
|---|---|---|
| DEN HAAG | 13-12-1985 | GINESTET M.E.J. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82